# EUROPEAN PATENT APPLICATION

(11) **EP 3 166 207 A1**
(43) Date of publication of application: **10.05.2017**
(21) Application number: 15814171.3
(22) Date of filing: 07.05.2015
(51) Int. Cl.: H02K 1/27, B62D 5/04, H02K 1/22, H02K 15/03

(54) **ELECTRIC POWER STEERING SYSTEM**

(30) Priority: 02.07.2014 JP 2014136468
(71) Applicant: Mitsuba Corporation, Kiryu-shi, Gunma 376-8555 (JP)
(72) Inventor: OKUBO Masayuki, Kiryu-shi Gunma 376-8555 (JP)
(74) Representative: Hoffmann Eitle
(86) International application number: PCT/JP2015/063197
(87) International publication number: WO 2016/002334

(57) **Abstract**

An electric power steering system 1 uses a brushless motor 3 as a drive source. The brushless motor 3 includes a stator 13 in which stator coils 17 are wound in a distributed manner and a rotor 14 rotatably disposed inside the stator 13. In the rotor 14, four sets of slit groups 31 each having circular-arc shaped slits 31a to 31c are formed. Rotor magnets 32 which are bonded magnets are filled in the slits 31a to 31c. The rotor magnets 32 are polar anisotropically magnetized. The rotor 14 is rotated by a magnet torque generated by the rotor magnets 32 and a reluctance torque based on a difference in inductance between magnetic paths so as to supply a steering assist force.

## Description

### Technical Field

The present invention relates to an electric power steering (EPS) system using a brushless motor as a drive source and, more particularly, to an electric power steering system in which returnability, convergence and stability of a steering wheel are improved.

### Background Art

In recent years, many automobiles are equipped with a so-called power steering device for assisting a steering force. As the power steering device, an electric power steering device has prevailed recently under circumstances where engine load reduction, weight reduction, and the like are required. Although complicated control is required for a motor that serves as a power source for the power steering device, a brushless motor is preferably used as the power steering device motor in terms of easiness of maintenance. In recent years, with improvement of performance of a control element or controller, an EPS system using the brushless motor becomes mainstream (see, for example, Patent Document 1).

### Citation List

### Patent Document

Patent Document 1: Jpn. Pat. Appln. Laid-Open Publication No. 2013-81312

### Disclosure of the Invention

### Problems to be Solved by the Invention

However, the motor-driven EPS is significantly influenced in terms of returnability, convergence, and stability (straight traveling performance) of a steering wheel by motor friction, motor inertia, or motor loss torque. For example, an increase in the motor friction or motor inertia may deteriorate the steering wheel returnability, which in turn may make it difficult for a steering wheel to return to its neutral position. Further, the increase in motor friction or motor inertia may deteriorate the convergence and, in this case as well, a steering wheel may hardly return to its neutral position (returning speed is reduced). A large loss torque may deteriorate the convergence, and cogging increases with fluctuation in the motor loss torque, which may deteriorate the steering wheel stability.

When a steering force is assisted, a large assist torque is required during parking or low-speed traveling. Therefore, an EPS motor needs to have a large torque specification so as to ensure a large assist torque. On the other hand, during high-speed traveling, followability to steering wheel operation is required, so that the EPS motor is also required to have a high-speed rotation specification. That is, the EPS is required to have a high-torque/high-speed rotation motor and, thus, in general, it has a specification where a high flux magnet and a coil with a large wire diameter are used to reduce the number of turns.

However, when the diameter of the high-torque/high-speed rotation motor is reduced, a dimension thereof in its axial direction is increased by the amount of reduction in the diameter, resulting in an increase in magnetic friction. Conversely, when the axial direction dimension is reduced, the diameter-direction dimension is increased by the amount of reduction in the axial direction dimension, resulting in an increase in the inertia. Thus, it is difficult to reduce both the friction and inertia without increasing the motor size, and the friction and inertia may involve effects on returnability and convergence of the steering wheel, as described above. Particularly, in the EPS, a motor is connected to a steering shaft through a deceleration mechanism, so that the friction or inertia of the motor is transmitted while being amplified to a steering system. That is, influence of the motor friction or motor inertia becomes large.

Further, the high-torque/high-speed rotation motor uses a high flux magnet such as a rare earth magnet, so that cogging may increase together with the loss torque or magnetic friction. The increase in the loss torque may deteriorate stability of a steering wheel, making the behavior of the steering wheel at the neutral position unstable, which in turn may deteriorate straight traveling stability.

### Means for Solving the Problems

An electric power steering system according to the present invention uses a brushless motor as a drive source and imparts a steering assist force to a steering shaft of a vehicle. The brushless motor includes a stator having a plurality of tooth sections protruding inward in a radial direction of the motor and phase windings wound around the tooth sections in a distributed manner, and a rotor rotatably disposed inside the stator and having a rotor core including a plurality sets of slit groups each having a plurality of curved slits arranged in a layered manner and a magnet embedded in each of the slits. The curved slits are each disposed in the rotor with a convex side thereof facing the center of the rotor. The magnets are each formed by polar anisotropically magnetizing a bonded magnetic material. The rotor is rotated by a magnet torque generated by a magnetic attraction force of the magnets and a reluctance torque based on a difference in inductance between magnetic paths so as to supply the steering assist force.

The present invention has the following functions:
(1) By adopting an IPM structure in which the magnets are embedded in the plurality of curved slits arranged in a layered state, it is possible to generate a reluctance torque and to suppress a magnet torque.
(2) By winding the phase winding in a distributed winding pattern, it is possible to increase the reluctance torque and to suppress the magnet torque.
(3) By using the bonded magnet, the thickness of the magnet can be reduced to thereby decrease a rotor diameter. Further, a variation in assembly of the magnet can be suppressed. Furthermore
   , a change in magnetic flux temperature can be reduced, so that a flux density at low temperature can be set to a small value.
(4) By applying polar anisotropic magnetization to the bonded magnetic material, the magnetic flux on the rotor surface is made into a sine wave, thereby smoothing a magnetic flux change.

As a result, both low friction and low inertia of the brushless motor as well as low loss torque/low cogging can be realized to thereby improve returnability, convergence, and stability of an EPS wheel.

In the electric power steering system, the magnets may each be filled and formed by pressure-supplying the bonded magnetic material to the rotor core disposed in a die and polar anisotropically magnetized by a magnet for magnetic field orientation provided in the die.

In the electric power steering system, the slit groups each have the three curved slits, and three magnets are arranged in a layered manner along the radial direction. In an IPM motor using the curved magnets, the three-layered structure has the best balance between a torque and productivity. Further, the curved slits may each be formed along a circular arc having its center point outside the rotor. By forming each curved slit into the circular-arc shape and embedding the magnet therein, the magnet can be disposed at a portion having a low magnetic resistance in a q-axis direction, thereby making use of a reluctance torque.

Further, the magnets may form a first magnetic pole which is N-pole or S-pole and a second magnetic pole which is different in polarity from the first magnetic pole, and assuming that the direction of a magnetic flux formed by the first and second magnetic poles is set as a d-axis, and that the axis that is magnetically orthogonal to the d-axis is set as a q-axis, a plurality of d-axes and q-axes may be provided alternately in the peripheral direction on the rotor. Further, assuming that the cross-section of the rotor is equally divided into regions to which each d-axis belongs with respect to each of d-axes of the first and second magnets, the magnets of the first magnetic pole side may be disposed in such a way as to protrude into a region of the second magnetic pole side without interfering with the magnets of the second magnetic pole side. By arranging the N- and S-poles asymmetrically, attraction force between the rotor and the stator generated in respective poles are cancelled to thereby reduce cogging. Further, high-frequency components are cancelled, an induced voltage waveform is made into a sine wave, and a torque ripple of a magnet torque is reduced. The reduction in the cogging and toque ripple improves returnability, convergence, and stability of a steering wheel, resulting in improvement in a steering feeling.

Further, the stator may have a bridge part provided in the inner peripheral side of the tooth sections and connecting the inner peripheral side tip portions of the tooth sections. By adopting a closed stator structure in which the tooth section tip ends are connected, a magnetic flux generated by the magnets is short-circuited to suppress a magnetic flux change, thereby reducing cogging.

Further, the outer periphery of the rotor may be made up of circular arcs each of which has a radius from a different center point for each of the first and second magnetic pole regions, and the center point of the radius may be located eccentrically outward in the radial direction by a predetermined distance from the center of the rotor. The eccentric structure of the rotor can reduce a high-frequency component of an induced voltage waveform, thereby reducing a torque ripple.

### Advantages of the Invention

According to the electric power steering system of the present invention, by adopting, in a brushless motor as a drive source thereof, an IPM structure in which the magnets are embedded in the plurality of curved slits arranged in a layered state, it is possible to generate a reluctance torque and to suppress a magnet torque. By winding the phase winding in a distributed winding pattern, it is possible to increase the reluctance torque and to suppress the magnet torque. As a result, magnet's flux can be suppressed to reduce magnetic friction of the motor to thereby improve returnability, convergence, and stability of a steering wheel. Further, a loss torque due to a magnetic flux can be reduced to thereby improve the convergence.

Further, by using the bonded magnet, the thickness of the magnet can be reduced to thereby reduce a rotor diameter. This reduces inertia to allow improvement in convergence of a steering wheel. Further, the use of the bonded magnet suppresses a variation in assembly of the magnet to reduce cogging. The bonded magnet exhibits less temperature-dependent magnetic flux change, so that a magnetic flux at low temperature can be reduced to thereby suppress a magnet torque.

Further, by applying polar anisotropic magnetization to the bonded magnetic material, the magnetic flux on the rotor surface is made into a sine wave, thereby smoothing a magnetic flux change. As a result, cogging is reduced to thereby improve returnability, convergence, and stability of a steering wheel.

### Brief Description of the Drawings

FIG. 1 is an explanatory view illustrating a configuration of an electric power steering system using a brushless motor;
FIG. 2 is a cross-sectional view illustrating a configuration of the brushless motor used in the electric power steering system according to a first embodiment of the present invention;
FIG. 3 is a cross-sectional view taken along the line A-A of FIG 2;
FIG. 4 is an explanatory view in which an obtained torque is compared between a concentrated winding and a distributed winding;
FIG. 5 is an explanatory view illustrating a configuration of a rotor;
FIG. 6 is an explanatory view illustrating the relationship between the number of magnets and Ld, Lq;
FIG. 7 is a schematic explanatory view illustrating the molding process of the rotor;
FIG. 8 is an explanatory view illustrating a result obtained by comparing the relationship between a temperature and a motor toque between a bonded magnet and a sintered magnet;
FIG. 9A is an explanatory view illustrating a magnetized state of a ring magnet subjected to polar anisotropic magnetization, FIG. 9B is an explanatory view illustrating a surface magnetic flux density in the polar anisotropic magnetized ring magnet, and FIG. 9C is an explanatory view illustrating a magnetized state of the rotor magnets;
FIG. 10 is a block diagram illustrating a configuration of a controller in the electric power steering system of FIG. 1;
FIG. 11 is an explanatory view illustrating a control mode for controlling the electric power steering system of FIG. 1;
FIG. 12 is a cross-sectional view illustrating a configuration of a brushless motor used in an electric power steering system according to a second embodiment of the present invention;
FIG. 13 is an explanatory view illustrating a configuration of a bridge part;
FIG. 14 is an explanatory view illustrating a configuration of a fitting/fixing part between an outer stator and an inner stator;
FIG. 15 is an explanatory view illustrating a configuration of a rotor in the brushless motor of FIG. 12;
FIG. 16 is an explanatory view illustrating an eccentric configuration of the rotor; and
FIGS. 17 are explanatory views each illustrating a modification of a magnet shape.

### Best Mode for Carrying Out the Invention

The object of the following embodiments is to realize both low friction and low inertia of a brushless motor at the same time as well as low loss torque/low cogging and thus to improve returnability, convergence, and stability of a steering wheel of an EPS.

### (First Embodiment)

The present embodiment improves returnability and convergence of a steering wheel during low-speed traveling and stability of a steering wheel during high-speed traveling by multilaterally and comprehensively reviewing the configuration of an EPS motor to thereby realize an EPS system excellent in traveling stability.

### (1) Suppression of Magnetic Friction/Loss Torque

In the EPS, the steering wheel returnability and stability are greatly influenced by magnetic friction of a motor, and thus a magnet's flux is required to be suppressed. Further, the loss torque having influence on the steering wheel stability also has relation to the magnet's flux. Thus, we have considered the use of a reluctance torque in order to suppress the magnet's flux and have adopted a hybrid type motor that rotates a rotor using a magnet torque and a reluctance torque. Further, for the purpose of increasing the reluctance torque, a distributed winding is used as a winding form.

### (2) Suppression of Inertia

In order to reduce the diameter of a rotor and to make maximum use of the reluctance torque, an IPM (Interior Permanent Magnet) type brushless motor having a structure in which a magnet is embedded in a rotor is adopted. In this case, for achieving both an increase in the reluctance torque and a reduction in the rotor diameter, a multilayer IPM rotor having a structure in which curve-shaped (preferably, circular-arc shaped) magnets are arranged in a multilayer is used. Further, in order for magnets to be arranged in a multilayer in a small-diameter rotor, a bonded magnet is adopted, and it is injection-molded in a rotor core. The use of the bonded magnet reduces a change in temperature of the magnetic flux, so that a magnetic flux density setting that allows for high-temperature demagnetization is relaxed, and the magnet's flux can be suppressed correspondingly.

### (3) Reduction in Cogging

Polar anisotropic magnetization is applied to the bonded magnet in the rotor to make a surface magnetic flux into a sine wave. This makes a magnetic flux change smooth to reduce the cogging without skewing (this reduces output torque, causing an increase in magnetic flux). Further, the injection-molding of the bonded magnet suppresses a variation in assembly, which in turn reduces the cogging and a variation thereof.

Based on the above-described considerations, the present inventor built an EPS system using a motor provided with:
- Distributed winding stator;
- Circular-arc shaped multilayer magnet rotor; and
- Polar anisotropic bonded magnet.

Hereinafter, the EPS system will be described.

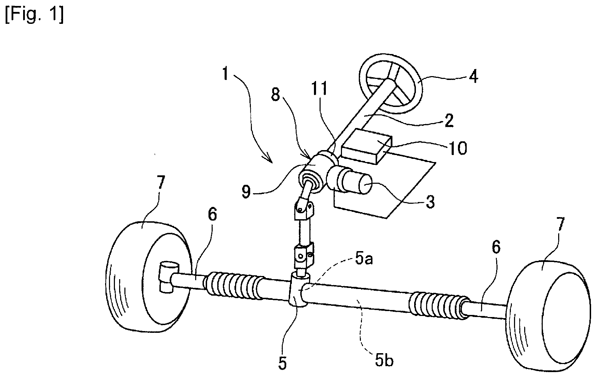

FIG. 1 is an explanatory view illustrating a configuration of an electric power steering system according to a first embodiment. An electric power steering system 1 (hereinafter, abbreviated as "EPS 1") of FIG. 1 is a column-assist type electric power steering system in which an operation assist force is imparted to a steering shaft 2. The EPS 1 uses a brushless motor 3 (hereinafter, abbreviated as "motor 3") as a power source.

A steering wheel 4 is attached to the steering shaft 2. The steering force of the steering wheel 4 is transmitted to a tie rod 6 through a pinion and a rack shaft (which are not illustrated) provided in a steering gear box 5. Wheels 7 are connected to the opposite ends of the tie rod 6, respectively. When the tie rod 6 is actuated with operation of the steering wheel 4, the wheels 7 are tuned left and right through an unillustrated knuckle arm or the like.

In the EPS 1, the steering shaft 2 is provided with an assist motor part 8 serving as a steering force assist mechanism. The assist motor part 8 is provided with a deceleration mechanism part 9 and a torque sensor 11 together with the motor 3. The deceleration mechanism part 9 is provided with a worm and a worm wheel (which are not illustrated). The rotation of the motor 3 is transmitted to the steering shaft 2 while being decelerated by the deceleration mechanism part 9. The motor 3 and the torque sensor 11 are connected to a controller (ECU) 12.

When an operator operates the steering wheel 4 to rotate the steering shaft 2, the torque sensor 11 for detecting the twist of an unillustrated torsion bar connected to the steering shaft 2 is activated. The controller 10 supplies electric power to the motor 3 when necessary according to a detection torque from the torque sensor 11. When the motor 3 is activated, the rotation of the motor 3 is transmitted to the steering shaft 2 through the deceleration mechanism part 9, whereby a steering assist force is imparted to the steering shaft 2. The steering shaft 2 is rotated by the steering assist force from the motor 3 and a manual steering force. Although a detailed illustration is omitted, the rotary motion of the steering shaft 2 is converted into the turning operation of the wheels 7 by coupling between the rack and pinion provided in the steering gear box 5. That is, the rotation of a pinion 5a provided at the leading end of the steering shaft 2 is converted into the linear motion of a rack shaft 5b, which turns the wheels 7.

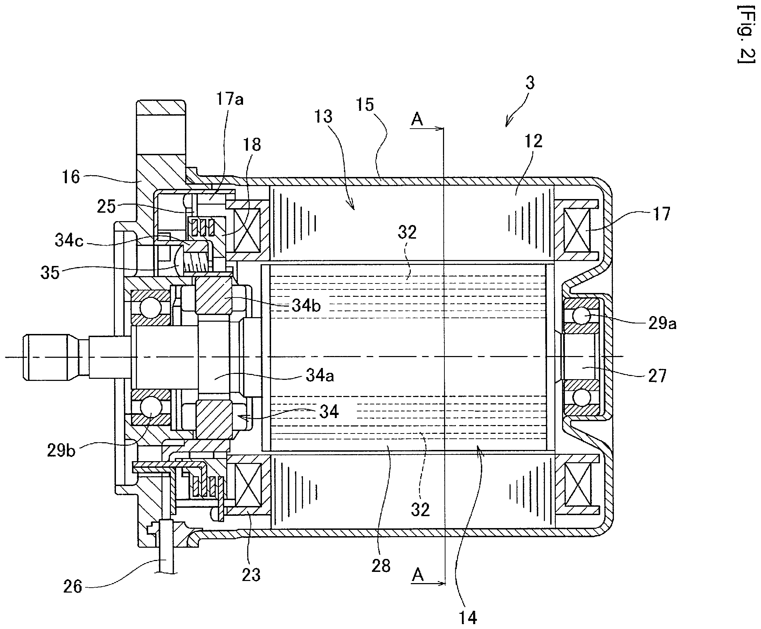

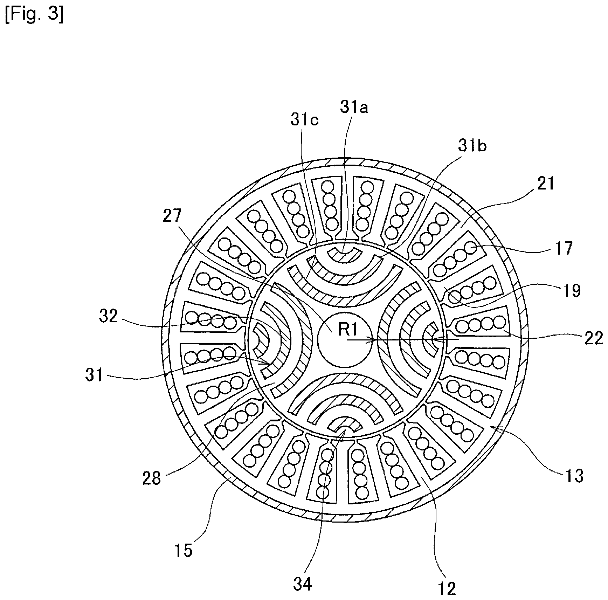

FIG. 2 is a cross-sectional view of the motor 3, and FIG. 3 is a cross-sectional view of the motor 3 taken along the line A-A of FIG. 2. The motor 3 is an IPM (Interior Permanent Magnet) type brushless motor having a structure in which a magnet is embedded in a rotor, and the rotor is rotated by a magnet torque and a reluctance torque. The IPM motor has a smaller magnetic friction than an SPM motor and thus can suppress a viscosity torque, thereby achieving stable convergence of a steering wheel. As illustrated in FIG. 2, the motor 3 is an inner rotor type brushless motor including a stator 13 on an outer side thereof and a rotor 14 on an inner side thereof. The stator 13 is fixed to the inside of a bottomed cylindrical motor casing 15. The rotor 14 is rotatably fitted in the casing 15. The casing 15 is made of a magnetic material such as iron and is formed into a bottomed cylindrical shape. The casing 15 has an opening part which is fitted with an aluminum die cast bracket 16 by an unillustrated fixing screw.

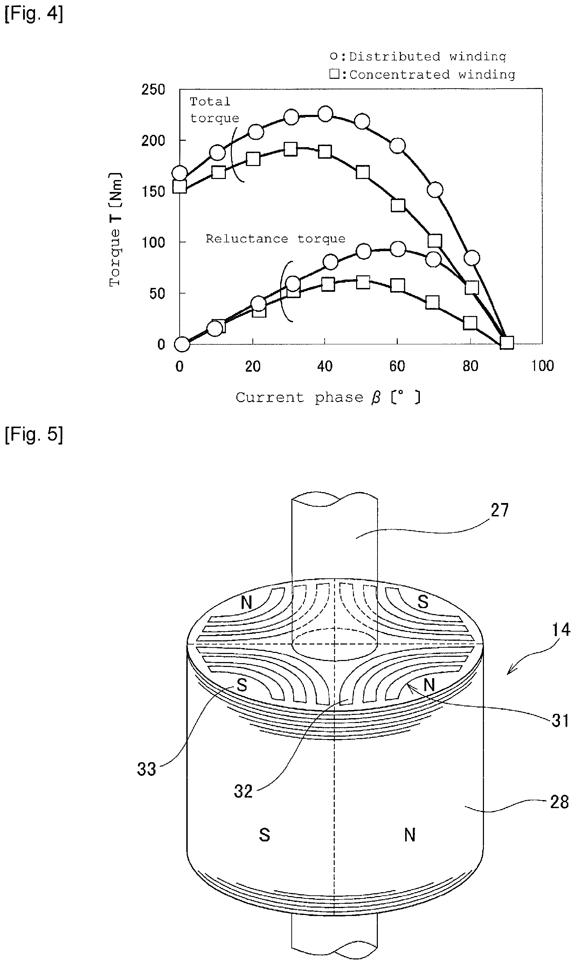

The stator 13 is constituted of a stator core 12, stator coils 17 (phase winding, hereinafter, referred to as "coils 17") and a bus bar unit (terminal unit) 18. The bus bar unit 18 is fitted to the stator core 12 and electrically connected to the coils 17. The coils 17 are wound in tooth sections 19 of the stator core 12 in a distributed winding pattern. Motor coil winding forms include the distributed winding and a concentrated winding. In this example, the distributed winding is adopted. In a motor adopting the concentrated winding, a magnetic flux concentrated portion inevitably occurs in a stator core. In the magnetic flux concentrated portion, magnetic saturation occurs to increase a magnetic resistance, making it difficult for a magnetic flux to flow there. On the other hand, in a motor adopting the distributed winding, a magnetic flux flows uniformly, making it difficult for magnetic saturation to occur, which allows a high flow of the magnetic flux. Particularly, in the motor 3, the magnetic resistance of a q-axis magnetic flux relating to the reluctance torque can be suppressed, thereby making efficient use of the reluctance torque. Thus, as illustrated in FIG.4, a larger torque can be obtained in the distributed winding than in the concentrated winding. This is the reason that the motor 3 adopts the distributed winding in the EPS 1.

The stator core 12 is formed by laminating a number of steel sheet materials (e.g., electromagnetic steel sheet). In an outer ring part 21 of the stator core 12, a plurality of (24, in this example) tooth sections 19 are formed so as to protrude inward in the radial direction of the motor 3. A slot 22 is formed between the adjacent tooth sections 19. In the motor 3, the number of the tooth sections 19 is 24 and it has a 24-slot configuration. The slot 22 houses inside thereof the coils 17. The stator core 12 is fitted with a synthetic resin insulator 23. The coils 17 are wound at the outside of the insulator 23.

The bus bar unit 18 is fitted to one end side of the stator core 12. The bus bar unit 18 has a synthetic resin main body formed into an annular shape. Inside the main body, a copper bus bar 24 is insert-molded. A plurality of bus bar terminals 25 are formed around the bus bar unit 18 so as to protrude in the radial direction. In mounting the bus bar unit 18, an end portion 17a of each of the coils 17 drawn from the stator core 12 is welded and electrically connected to each of the bus bar terminals 25. In the bus bar unit 18, the bus bars are provided as many as the number (in this example, four bas bars (three for U-, V-, and W-phases, and one for connecting the three phases) are provided) of phases of the motor 3. The coils 17 are electrically connected to the bus bar terminals 25 corresponding to the respective phases. To the coils 17, phase currents (U, V, and W) are supplied from an unillustrated battery through a power feeding wire 26. The stator core 12 is fitted with the bus bar unit 18 and then press-fitted and fixed inside the casing 15.

The rotor 14 is inserted inside the stator 13. FIG. 5 is an explanatory view illustrating a configuration of the rotor 14. A rotary shaft 27 of the rotor 14 is rotatably axially supported by bearings 29a and 29b. The bearings 29a and 29b are fixed to the bottom center of the casing 15 and the center portion of the bracket 16, respectively. The rotary shaft 27 is fitted, by a fixing means such as press-fitting, with a cylindrical rotor core 28 and a rotor (resolver rotor) 34a of a resolver 34 serving as a rotation angle detection means. A stator (resolver stator) 34b of the resolver 34 is housed in a synthetic resin resolver bracket 34c. The resolver bracket 34c is fixed to the inside of the bracket 16 by a fitting screw 35.

The rotary shaft 27 is connected to a worm shaft of the deceleration mechanism part 9 by an unillustrated joint member. A worm is formed on the worm shaft. In the deceleration mechanism part 9, the worm shaft meshes with a worm wheel fixed to the steering shaft 2.

As illustrated in FIG. 5, the rotor core 28 is also formed by laminating a number of disk-shaped electromagnetic steel sheets. Slit groups 31 are formed so as to be bent in a circular arc (arched shape). The slit groups 31 are formed along the circular arc having its center at a virtual point (not illustrated) set outside the outer periphery of the rotor 14. Three slits are arranged as one slit group in a layered state in the radial direction with convex sides thereof facing the center side of the rotor 14. That is, one set of slit group 31 is constituted of the outermost first slit 31a, the intermediate second slit 31b, and the innermost third slit 31c.

The slit groups 31 are each filled with a bonded magnet, and thus rotor magnet 32 are formed. By filling with the bonded magnets, the rotor magnets 32 are installed inside the rotor 14, whereby the motor 3 becomes an IPM type brushless motor. For example, an anisotropic neodymium bonded magnetic material or the like is used as the bonded magnet. The neodymium bonded magnetic material is a material obtained by mixing magnetic powder of a rare-earth magnet such as a neodymium magnetic material with a synthetic resin such as epoxy. The bonded magnetic material is filled in each slit group 31 by injection molding, followed by predetermined magnetization, whereby shaping of the bonded magnetic material is accomplished.

In the rotor 14, magnetic pole parts 33 each constituted of laminated magnets are formed by the rotor magnets 32 in the slit groups 31. As the magnetic pole parts 33, a rotor magnet 32s whose outer peripheral side is magnetized as S-pole and a rotor magnet 32n whose outer peripheral side is magnetized as N-pole are provided. Two magnetic pole parts magnetized as S-pole and two magnetic pole parts magnetized as N-pole (four magnetic pole parts in total) are alternately arranged along the peripheral direction of the rotor 14. As a result, the motor 3 has a 4-pole 24-slot (4P24S) structure. Each magnetic pole part 33 has three rotor magnets 32 arranged in a layered state along the radial direction. In the rotor 14, a d-axis which is a direction of the magnetic flux formed by each of the magnetic poles and a q-axis which is magnetically orthogonal to the d-axis are formed by each of the magnetic pole parts 33. A plurality of the d- and q-axes are alternately arranged in the peripheral direction on the rotor 14. In the rotor 14, in order to make it easier for a q-axis magnetic flux to pass, the circular arc-shaped slit groups 31 are provided.

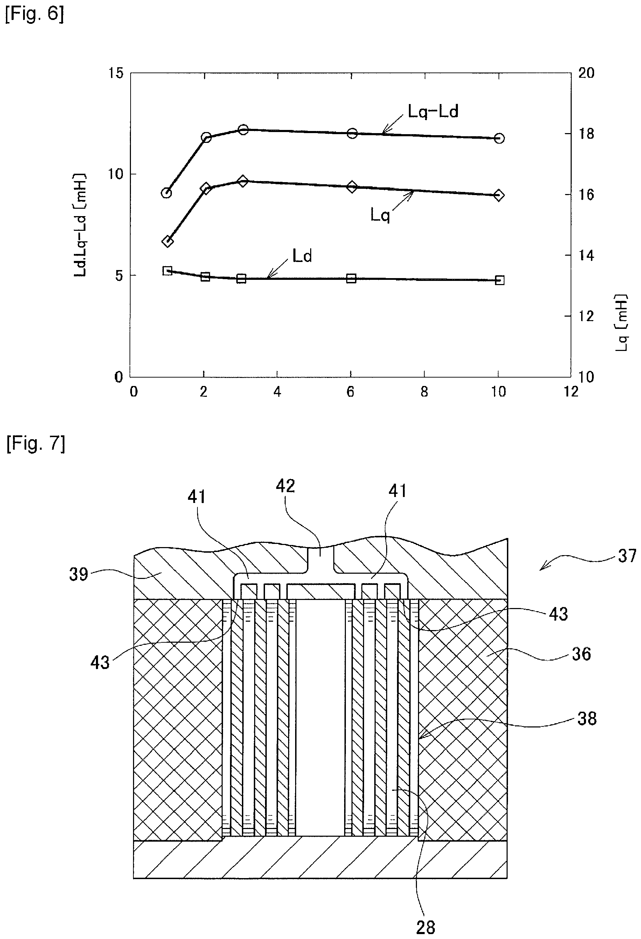

The slit groups 31 are each filled with the rotor magnet 32. The rotor 14 is formed in such a way as to make it easier for the q-axis
magnetic flux to pass and to increase an inductance Lq. In a reluctance motor, the larger the difference between Lq and Ld is, the larger a reluctance. While, as can be seen from FIG. 6, the difference between Lq and Ld is larger when the number of magnet layers is three than when it is one or two, no significant difference is observed when the number of layers is greater than or equal to three. Thus, in view of balance with the slit width, the magnets are formed as three layers in the rotor 14 for effectively increasing the reluctance torque.

In the motor 3, by forming the rotor magnets 32 into a circular-arc shape and arranging them along the flowing direction of the q-axis magnetic flux, the reluctance torque can be efficiently generated. Further, by arranging the rotor magnets 32 in a multilayer, the reluctance torque can be made larger. Further, the coils 17 are wound in a distributed winding pattern to make it difficult for magnetic saturation to occur, so that the magnetic resistance of the q-axis magnetic flux can be suppressed, resulting in an increase in the reluctance torque. The increase in the reluctance torque can reduce a magnet torque correspondingly to allow magnetic friction and loss torque of the motor, whereby returnability, convergence, and stability of the steering wheel can be improved.

On the other hand, when intending to arrange the three rotor magnets 32 in a layered manner without changing the outer diameter of the rotor, the thickness of the magnet needs to be made smaller. Further, when intending to store a flat segment magnet in each of the slit groups 31, a gap (air layer) is generated. In this gap portion, a magnet resistance is increased, and self-demagnetization easily occurs. Further, backlash occurs due to existence of the gap to cause a variation in performance. On the other hand, in the rotor 14, the rotor magnets 32 are formed by injection-molding of the bonded magnets. Thus, unlike the case of using the flat magnet, the gap is not generated, and thus, the variation in performance due to backlash is not also generated.

FIG. 7 is a schematic explanatory view illustrating the molding process of the rotor 14. As illustrated in FIG. 7, the rotor 14 is formed using a magnetic field orientation die 37 provided with a plurality of magnets 36 for magnetic field orientation. For example, a rare-earth magnet such as a samarium cobalt magnet is used as the magnets 36 for magnetic field orientation. The rotor core 28 is housed and disposed in a cavity part 38 formed inside the magnets 36 for magnetic field orientation. An upper die 39 connected to an unillustrated nozzle of an injection molding machine is placed on the cavity part 38. The upper die 39 has a plurality of runners 41 and a sprue 42 connected with one ends of the respective runners 41. The runners 41 serve as flow paths for supplying a molten bonded magnet to the plurality sets of slit groups 31. Each of the runners 41 are branched at the other end so as to correspond to slits 31a to 31c of each of the plurality sets of slit groups 31.

A connection part (opening part) between the slits 31a to 31c of each of the plurality sets of slit groups 31 and the runners 41 serve as a plurality of gates 43. When the rotor 14 is formed, the rotor core 28 for which a lamination process has been completed is housed in the cavity part 38 of the magnetic field orientation die 37. Subsequently, the upper die 39 is placed on the rotor core 28, and the slit groups 31 of the rotor core 28 and the gates 43 are connected to each other. Then, in this state, a molten bonded magnetic material is injected to the sprue 42 from an unillustrated nozzle of an injection molding machine. The bonded magnetic material supplied by pressurization to the sprue 42 flows inside the each slits 31a to 31c of the slit groups 31 of the rotor core 28 from the runners 41 through the gates 43.

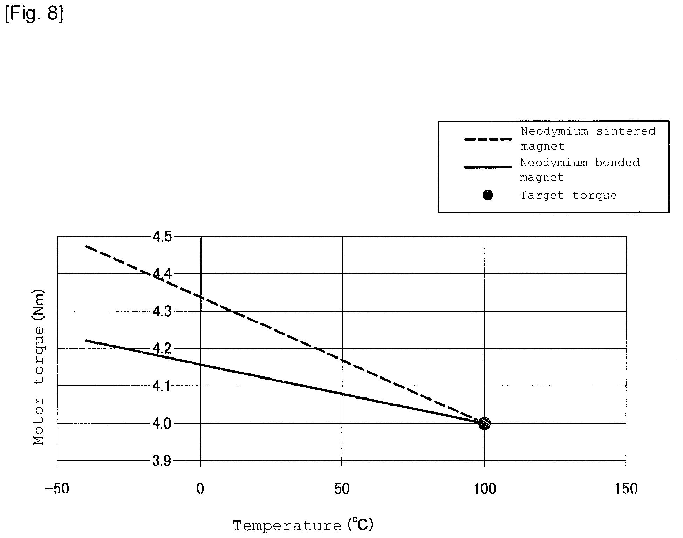

The bonded magnet exhibits less temperature-dependent magnetic flux change than a sintered magnet. FIG. 8 is an explanatory view illustrating a result obtained by comparing the relationship between a temperature and a motor toque between the bonded magnet and a sintered magnet. As illustrated in FIG. 8, in the neodymium sintered magnet, when an ambient temperature changes from 0°C to 100°C, the torque is reduced by approximately 10%. On the other hand, in the neodymium bonded magnet, the torque is reduced by almost half of the value obtained in the neodymium sintered magnet. Thus, as the bonded magnet, a magnet having a lower flux density than the sintered magnet can be used in order to obtain the same target torque of 100°C. Thus, loss torque and cogging are reduced due to the reduced magnetic flux density. This results in improvement in stability of the steering wheel to make the behavior of the steering wheel at the neutral position stable, which in turn improves straight traveling stability.

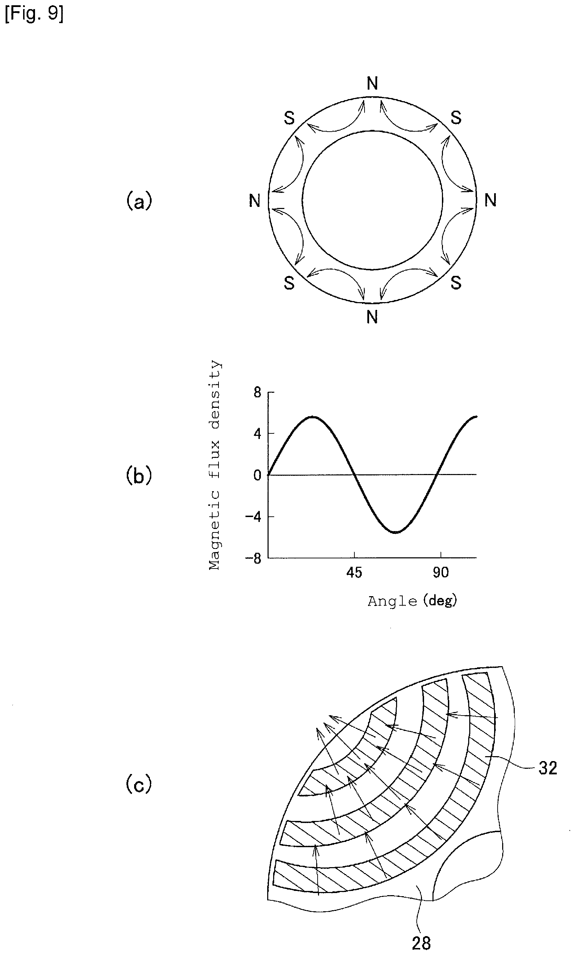

The bonded magnetic material flowing in the slit groups 31 is magnetized with the direction of magnetic powder controlled by the magnets 36 for magnetic field orientation, with the result that the magnetic pole parts 33 having the polarities illustrated in FIG. 5 are formed. In the magnetic field orientation die 37, polar anisotropic magnetization is applied to the bonded magnetic material using anisotropic magnetic powder by the magnets 36 for magnetic field orientation, whereby directions of the magnetic powder are mutually aligned. FIG. 9A is an explanatory view illustrating a magnetized state of a ring magnet subjected to the polar anisotropic magnetization, FIG. 9B is an explanatory view illustrating a surface magnetic flux density in the polar anisotropic magnetized ring magnet, and FIG. 9C is an explanatory view illustrating a magnetized state of the rotor magnet 32.

In the case of the polar anisotropic magnetization, the magnets of respective layers are magnetized in such a way that magnetization vectors are directed to the center positioned inside the circular arc as illustrated in FIG. 9C, so that a peak value of the surface magnetic flux is increased. Further, as illustrated in FIG. 9B, the surface magnetic flux density becomes a sine wave. In the rotor magnet 32 as well, a surface magnetic flux density waveform after magnetization has a high peak value and brought close to a sine wave. Therefore, when such a rotor magnet is used in the rotor 14, a motor having a low cogging torque can be achieved without skewing. As a result, in the EPS 1, stability of the steering wheel is improved, thereby enhancing straight traveling stability during high-speed traveling.

The bonded magnetic material in the slit groups 31 is magnetized by the magnets 36 for magnetic field orientation. That is, the rotor magnets 32 are shaped while being magnetized by the magnets 36 for magnetic field orientation. In the magnetic field orientation die 37, the magnets 32 are magnetized up to a magnetization percentage of about 80% of a full magnetization state by the magnets 36 for magnetic field orientation. Then, the rotor 14 is subjected to full magnetization by a magnetizing machine after the bonded magnetic material is filled and shaped. However, when the 80% magnetization state is sufficient for practical use, the additional magnetization using the magnetizing machine can be omitted.

In the above-mentioned EPS 1, when the steering wheel 4 is operated to rotate the steering shaft 2, the rack shaft is moved in the direction according to the rotation of the steering shaft 2, whereby the turning operation is performed. The turning operation activates the torque sensor 11. In response to a detection torque from the torque sensor 11, power is supplied to the coils 17 from an unillustrated battery through the feeding wire 26. When power is supplied to the coils 17, the motor 3 is activated to rotate the rotary shaft 27 and the worm shaft. The rotation of the worm shaft is transmitted to the steering shaft 2 through the worm wheel, thereby assisting a steering force.

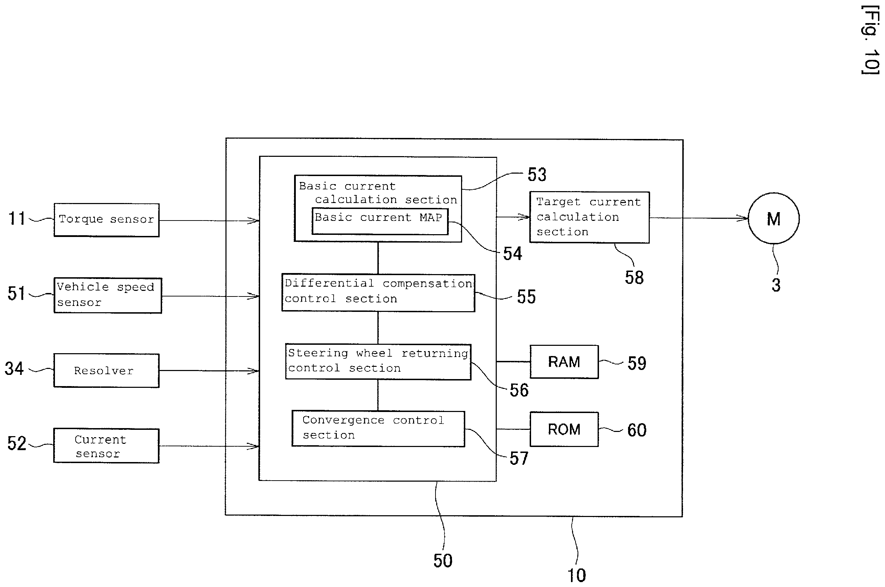

FIG. 10 is a block diagram illustrating a configuration of the controller 10 of the EPS 1. The EPS 1 is drive-controlled by the controller 10. As illustrated in FIG. 10, the controller 10 includes a current command section 50 that controls an amount of current to be supplied to the motor 3, a RAM 59 and a ROM 60 that store control data. The current command section 50 is connected with the torque sensor 11, a vehicle speed sensor 51, the resolver 34, and a current sensor 52. The current command section 50 determines an amount of current to be supplied to the motor 3 on the basis of detection values from the respective sensors and appropriately controls the EPS 1.

The torque sensor 11 detects, accompanying the operation of the steering wheel 4, the twisting of an unillustrated torsion bar connected to the steering shaft 2 to thereby detect a torque value which is a load value of the motor 3. The detection value of the torque sensor 11 is input to the current command section 50 as motor load information. The vehicle speed sensor 51 detects a travel speed of a vehicle on which the EPS 1 is mounted. The detection value of the vehicle speed sensor 51 is input to the current command section 50 as vehicle speed information. The resolver 34 detects a rotation position of the rotor 14. The rotor rotation position is successively input to the current command section 50 as rotor rotation position information. The current command section 50 also calculates a motor rotational speed from the rotor rotation position information. The current sensor 52 detects a current value presently supplied to the motor 3 and outputs the detected current value to the current command section 50.

The current command section 50 includes a basic current calculation section 53 that performs computation based on the above detection values to calculate a basic current amount to be supplied to the motor 3. The basic current calculation section 53 calculates the basic current amount by referring to a basic current map 54 on the basis of the detection values from the torque sensor 11 and the vehicle speed sensor 51. The basic current calculation section 53 sets the amount of current to be supplied to the motor so that an assist force according to a steering torque is output in accordance with a vehicle speed. The current command section 50 further includes a differential compensation control section 55. The differential compensation control section 55 calculates a current compensation value for correcting the basic current amount on the basis of the detection values from the torque sensor 11 and the vehicle speed sensor 51. The current compensation value corrects the motor supply current in accordance with fluctuation in the steering torque to suppress fluctuation in the steering force, thereby improving a steering feeling.

The current command section 50 further includes a steering wheel returning control section 56 and a convergence control section 57. The control sections 56 and 57 appropriately correct the basic current amount on the basis of the detection values from the vehicle speed sensor 51 and the resolver 34 so as to improve returnability and convergence of the steering wheel. The steering wheel returning control section 56 makes current flow in an assist direction so as to assist returning of the steering wheel during low-speed traveling, thereby improving returnability of the steering wheel by a self-aligning torque. The convergence control section 57 makes motor current flow in a direction opposite to a steering wheel rotation direction to improve convergence and stability of the steering wheel when hands are off the steering wheel and adjusts the difference between a steering reaction force in a turning state and that in a returning state.

A target current calculation section 58 is provided at the rear stage of the basic current calculation section 53 and the differential compensation control section 55. The target current calculation section 58 calculates and determines an amount of current to be supplied to the motor 3. The target current calculation section 58 adds, to the basic current amount calculated by the basic current calculation section 53, the current compensation value calculated by the differential compensation control section 55 and the settings made by the steering wheel returning control section 56 and the convergence control section 57 to thereby finally determine the current amount. The target current calculation section 58 receives a present current value of the motor 3 from the current sensor 52. The target current calculation section 58 feedback-controls the motor 3 on the basis of the present current value.

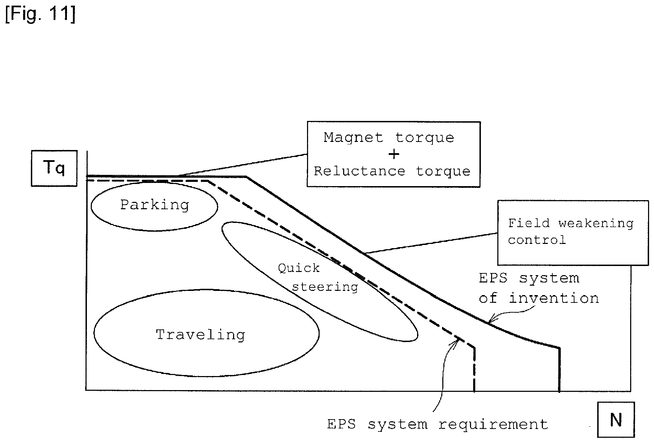

FIG. 11 is an explanatory view illustrating a control mode for controlling the EPS 1 using the controller 10. As illustrated in FIG. 11, the controller 10 performs maximum torque control during parking/low-speed traveling so as to make the motor 3 as "high torque motor". As a result, a large assist force can be obtained at garaging operation or the like. The motor 3 adopts the "distributed winding stator", the "circular-arc shaped multilayer magnet rotor", and the "polar anisotropic bonded magnet" and can thereby realize low friction and low inertia and suppress loss torque while exhibiting high torque. Thus, returnability and convergence of the steering wheel during parking/low-speed traveling are improved, making it possible to perform garaging operation easily and comfortably.

During high-speed traveling, the controller 10 performs maximum rotation speed control so as to make the motor 3 as "high-speed rotation motor". As a result, an assist force can be promptly imparted with a high rotational speed also at a wheel turning operation during high-speed traveling. The motor 3 realizes low friction and low inertia and suppresses loss torque and cogging. Thus, high responsibility is exhibited during high-speed traveling and, at the same time, stability of the steering wheel is improved to improve straight traveling stability, thereby enabling stable high-speed traveling.

During normal traveling during which the vehicle speed is in an intermediate range between high speed and low speed, the controller 10 performs optimum control according to the torque and the vehicle speed. That is, the controller 10 drives the motor 3 in a control mode in which the maximum torque control and the maximum rotation speed control are mixed on the basis of the detection values from the torque sensor 11 and the vehicle speed sensor 51. This control mode is reflected in the basic current map 54. The controller 10 imparts an assist force appropriate for conditions to the EPS system according to the torque and the vehicle speed while referring to the basic current map 54.

As described above, the EPS 1 according to the present invention has the following advantages.
(a) By adopting the IPM structure in which the magnets are embedded in the plurality of curved slits arranged in a layered state, it is possible to generate a reluctance torque and to suppress a magnet torque correspondingly.
(b) By winding the phase winding in a distributed winding pattern, it is possible to increase the reluctance torque and to suppress the magnet torque correspondingly.
(c) By using the bonded magnet, the thickness of the magnet can be reduced to thereby reduce the rotor diameter. Further, a variation in the assembly of the magnet can be suppressed. Further, a change in magnetic flux temperature can be reduced, so that a magnetic flux at low temperature can be reduced.
(d) By applying polar anisotropic magnetization to the bonded magnetic material, the magnetic flux on the rotor surface is made into a sine wave, thereby smoothing a magnetic flux change.

From the above (a) to (d), (1) suppression of magnetic friction/loss torque (suppression of magnet's flux), (2) suppression of rotor inertia, and (3) reduction in cogging can be realized.

### (1) Suppression of Magnetic Friction/Loss Torque

From the above (a), (b) and (c) (reduction in magnetic flux at low temperature), the magnet's flux can be reduced.

When the magnet's flux is reduced, magnetic friction of the motor is reduced to improve returnability, convergence and stability of the steering wheel. Further, loss torque due to the magnetic flux is reduced, thereby improving convergence.

Further, by utilizing the reluctance torque, a sufficient torque can be maintained even in field weakening control. Thus, it is possible to achieve high-speed rotation under the field weakening control while satisfying a torque requirement demanded on the EPS system.

### (2) Suppression of Inertia

From the above (a) (multiple layering), and (c), the diameter of the rotor can be reduced to allow inertia reduction.

The inertia reduction allows the rotor to be rotated lightly, thereby improving convergence of the steering wheel.

### (3) Reduction in Cogging

From the above (c), (reduction in variation in assembly), and (d), motor cogging can be reduced.

The reduction in the cogging improves returnability, convergence, and stability of the steering wheel.

The above (1) to (3) synthetically improve the "returnability", "convergence", and "stability" of the steering wheel while being involved with each other. Thus, improvement in "returnability", improvement in "convergence", and improvement in "stability" are not independently achieved, and points other than those described in the above (1) to (3) may also be improved. Further, the improvement in "returnability" and the like improves a steering feeing.

### (Second Embodiment)

The following describes, as a second embodiment, an EPS system in which torque ripple and torque ripple of the motor are reduced by devising structures of the stator and the rotor to improve convergence and stability of the steering wheel. In the following description, the members and portions that are the same as, or similar to, those of the first embodiment are represented by the same numerals, and will not be described repeatedly.

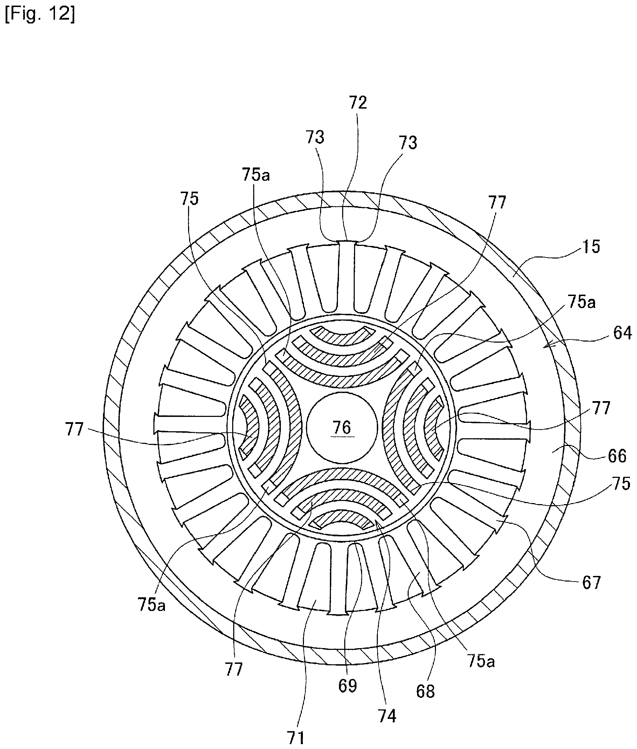

FIG. 12 is a cross-sectional view of a brushless motor 61 used in the EPS system according to the second embodiment of the present invention. A motor 61 is used as a drive source for the EPS system as illustrated in FIG. 1. Like the motor 3, the motor 61 is an inner rotor type brushless motor including a stator 62 on an outer side thereof and a rotor 63 on an inner side thereof. The stator 62 has a stator core 64 and a stator coil 65 (hereinafter, referred to as "coil 65"). The stator core 64 is constituted of a cylindrical outer stator 66 and an inner stator 67 fitted to the inner peripheral side of the outer stator 66.

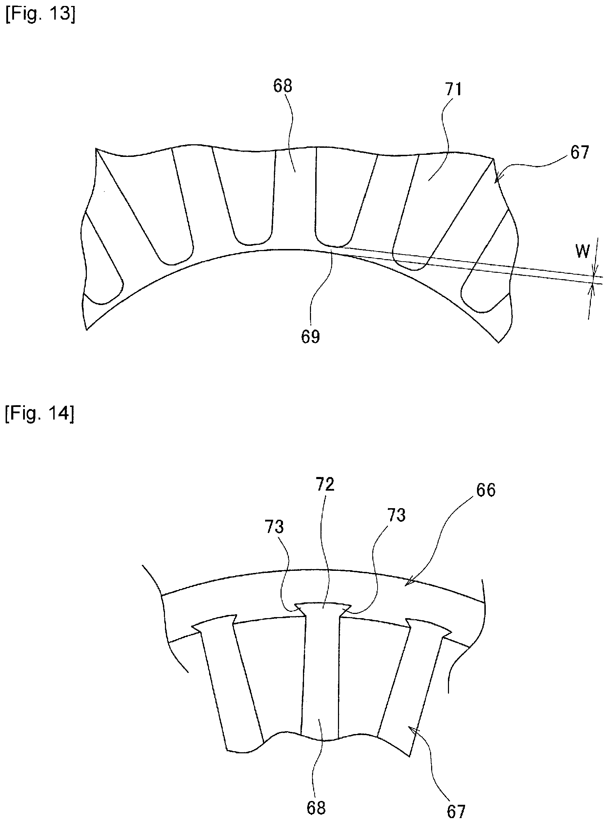

The outer stator 66 and the inner stator 67 are each formed by laminating a number of electromagnetic steel sheets each having a thickness of t (t = about 0.35 mm to 0.70 mm). The inner stator 67 is constituted of radially-formed 24 tooth sections 68 and a bridge part 69 connecting the inner peripheral sides of the tooth sections 68. A slot 71 is formed between the adjacent tooth sections 68. As illustrated in FIG. 13, in the motor 61, a width W of the bridge part 69 in the radial direction is set within a range t (thickness of one steel sheet constituting the stator core 64) ≤ W ≤ 1.5 mm.

In the motor 61, the inner peripheral sides of the tooth sections 68 are connected by the bridge part 69. Accordingly, unlike a typical motor, a coil cannot be wound around the tooth section with the use of slits on the tooth tip sides. In the case of the motor 61, the stator 62 is divided into the outer stator 66 and the inner stator 67, and the tooth section outer peripheral sides of the inner stator 67 are made open. This configuration enables formation of a coil 65, by winding a copper wire around the tooth sections 68. After the coil 65 is wound around in a distributed winding pattern, the tooth sections 68 are mounted on the inner peripheral side of the outer stator 66 (fitting and fixing). The distributed winding can keep the leak of magnetic flux in the bridge part 69 lower than that of the concentrated winding and can have a larger maximum torque than the concentrated winding.

By closing the inner peripheral side of the stator 62 with the bridge part 69, a magnetic flux generated by magnets 77 is short-circuited to suppress a magnetic flux change, thereby reducing cogging. According to experiments made by the present inventors, this tendency does not change even when an amount of the magnetic flux is changed. Further, the width W of the bridge part 69 is preferably set to equal to or larger than the thickness of one steel sheet constituting the stator core 64 in order to reduce cogging. However, when the width W exceeds 1.5 mm, the magnetic flux is likely to come around to the bridge part 69, increasing the magnet flux leakage, which results in reduction in effective magnetic fluxes. Thus, from the viewpoint of an output torque, the width W is preferably equal to or smaller than 1.5 mm.

FIG. 14 is an explanatory view illustrating a configuration of a fitting/fixing part between the outer stator 66 and the inner stator 67. The motor 61 has the 24 tooth sections 68. Each tooth section 68 is fitted/fixed at its outer peripheral side to a tooth fitting groove (concave part) 16 formed in the inner peripheral surface of the outer stator 66. As illustrated in FIG. 14, the outer stator 66 has a dovetail tooth fitting groove 72 having a V-shape cross section. The tooth fitting groove 72 is formed so as to extend in the axial direction over the entire length of the outer stator 66. The tooth section 68 has, at its outer peripheral side, a tenon fitting part 73 whose outer end side is expanded. By insertional fitting the tooth fitting groove 72 and the fitting part 73 in the axial direction, the outer stator 66 and the inner stator 67 are fixed to each other while being prevented from mutually coming off in the radial and peripheral directions.

A rotor core 74 constituting the rotor 63 is also formed by laminating a number of disk-shaped electromagnetic steel sheets. A plurality of circular-arc shaped slits 75 are formed in the steel sheets constituting the rotor core 74. Assuming that the direction of a magnetic flux formed by magnetic poles (or central axis of permanent magnets) is set as a d-axis, and that the axis that is magnetically orthogonal to the d-axis (axis between permanent magnets) is set as a q-axis, the plurality sets of slits 75 are provided, with q-axis, which is perpendicular to a rotary shaft 76, as a boundary. In the motor 61, four sets of the slits 75 ( slit groups) are provided. A magnet 77 is embedded in each slit 75. The slits 75 are disposed in a circular-arc shape around imaginary points (described later; centers Os and On of circular arcs of S- and N-pole magnets 77n and 77s), which are set outside the outer periphery of the rotor 63 on d-axis. Cavity parts 75a functioning as a flux barrier for making magnetic resistance of the rotor 63 vary along the rotational direction are formed in the steel sheets constituting the rotor core 74. Although a segment magnet is used as the magnet 77 in the motor 61, a bonded magnet may be used.

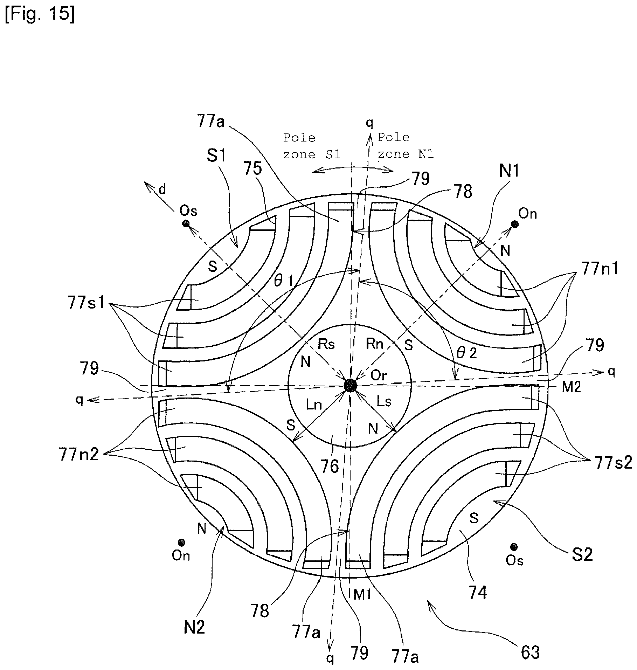

FIG. 15 is an explanatory view illustrating the rotor 63. In the rotor 63, as the plurality of magnets 77, magnets 77s (77s1, 77s2) whose outer peripheral sides serve as S-poles and magnets
77n (77n1, 77n2) whose outer peripheral sides serve as N-poles are provided. The rotor 63 has a 4-pole structure, and the motor 61 is so formed as to have a 4-pole 24-slot structure. The S-pole magnets 77s1 and 77s2 and N-pole magnets
77n1 and 77n2 are disposed asymmetrically about the center line (magnet asymmetric arrangement). The rotor 63 is shaped in such a way as to have an eccentric outer periphery (rotor eccentricity).

In the rotor 63, the asymmetrical setting of the magnets reduces the torque ripple. The asymmetrical setting in the rotor 63 has the following features:
(a) The cross-section of the rotor 63 is equally divided into regions to which each d-axis belongs with respect to each of d-axes of the magnets 77s (first magnetic pole) and of the magnets 77n (second magnetic pole). Then, an innermost magnet 77a of one pole (S-pole in this case) with respect to center lines M1 and M2 of the rotor 63 that are perpendicular to each other and serve as division lines for each region is disposed in such a way as to protrude into an adjacent pole zone (region). The magnet protruding into the adjacent pole zone does not interfere with a magnet of an adjacent pole, and a space for a q-axis magnetic path is secured. As a result, an angle θ1 (central angle around a center Or of the rotor 63) of a magnet 77s's region that is divided by q-axis is set larger than angle θ2 (same as above) of a magnet 77n's region (θ1 > θ2).
(b) The central positions of magnets 77 are different between S- and N-poles. That is, the distance (magnet center distance) Rs (R1) between the center Os (first center point) of a circular arc of S-pole magnets 77s and the center Or of the rotor 63 is different from the distance (magnet center distance) Rn (R2) between the center On (second center point) of a circular arc of N-pole magnets 77n and the center Or of the rotor 63 (Rs ≠ Rn).
(c) The distance (shortest distance) Ls (L1) between the innermost magnet 77a of the S-pole and the center Or of the rotor 63 is different from the distance (shortest distance) Ln (L2) between the innermost magnet 77a of the N-pole and the center Or of the rotor 63 (Ls ≠ Ln).

As shown in FIG. 15, in the rotor 63, with respect to each of d-axes of magnets 77s (first magnetic pole) and of magnets 77n (second magnetic pole), there are four regions, which are defined by equally dividing the cross section of the rotor 63 into regions to which each d-axis belongs, i.e., four pole zones S1, N1, S2, and N2, which are defined by center lines M1 and M2. In the rotor 63, an outer peripheral part 78 of the S-pole magnet 77s of an innermost layer (layer closest to rotor center point Or) protrudes into the adjacent pole zone N1 or N2 of the other pole from the pole zone S1 or S2. The larger a lap margin into an adjacent zone becomes, the more the torque ripple can be reduced. However, in order to prevent interference with an adjacent pole, a space 79 is provided between the S-pole magnet 77s and its adjacent N-pole magnet 77n. Incidentally, a magnet that protrudes into an adjacent zone-side region may be of either S-pole or N-pole. What is shown here is the case where the S-pole magnet 77s has lapped over into the N-pole zone.

In general, when magnets are symmetrically disposed in a motor, the number of times cogging occurs is equal to a least common multiple of the poles and slots. Accordingly, in the case of a 4-pole 24-slot motor, cogging occurs for 24 peaks per rotation of the motor. In order to reduce the cogging, some methods are available, such as application of skewing. In this case, the problem is that the torque is lowered due to leakage flux. In the case of the motor 61, the rotor 63 is formed into an asymmetrical shape in line with (a) to (c). Therefore, the cogging is reduced as attraction forces generated between the rotor and the stator in respective poles are cancelled.

The output torque of the motor 61 is a combination of reluctance torque and magnet torque. In the case of a symmetric rotor, due to fluctuation of Ld-Lq, the ripple of the reluctance torque becomes larger. On the other hand, in the case of the motor 61, the rotor is asymmetrical. Therefore, the reluctance torque that is generated in the S-pole zones S1, S2 and the reluctance torque that is generated in the N-pole zones N1, N2 are cancelled, leading to a reduction in the torque ripple. As for the magnet torque, in the case of a symmetric rotor, an induced voltage waveform deforms as high-frequency components are superimposed on the magnetic flux, resulting in an increase in the torque ripple. On the other hand, in the case of an asymmetric rotor, high-frequency components are cancelled, an induced voltage waveform is made into a sine wave, and a torque ripple of a magnet torque is reduced.

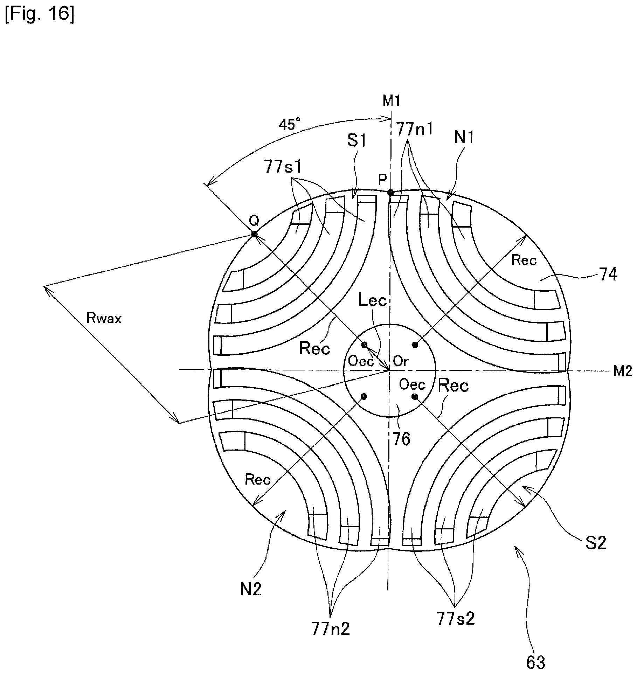

Further, in the rotor 63, the torque ripple is reduced by the outer peripheral eccentric setting. FIG. 16 is an explanatory view illustrating an eccentric configuration of the rotor 63. In FIG. 16, in order to make clear the eccentric state of the rotor 63, the rotor outer shape is exaggerated. As illustrated in FIG. 16, the outer periphery of the rotor 63 is not a uniform circumference of a circle around the point Or. The outer periphery of the rotor 63 is made up of circular arcs each of which has a radius from a different center point for each of the four pole zones S1, S2, N1, and N2. The outer peripheries of the respective pole zones S1, S2, N1, and N2 are connected together at a boundary point P of each pole zone. The outer periphery of each pole zone is formed as a circular arc with a radius of Rec from eccentric point Oec. The eccentric point Oec is an eccentric distance Lec away from the rotor center point Or toward a radial-direction outer side. The eccentric point Oec is located on a line segment that is tilted at 45 degrees to the center lines M1 and M2. The radius Rec is smaller than a distance Rmax between an outermost position Q of the rotor 63 and the rotor center point Or.

When the outer periphery of the rotor 63 is made eccentric, a higher-frequency component of the induced voltage waveform can be further reduced. As a result, the torque ripple can be further reduced. Moreover, the eccentricity of the rotor can moderate a magnetic flux change caused by the rotation of the rotor. As a result, fluctuation in the magnet torque can be reduced, and the torque ripple can be reduced. That is, with the rotor asymmetrical setting, the motor 61 can reduce both the ripples of the reluctance torque and the magnet torque, and can reduce the cogging. Thus, the use of motor 61 for the EPS system can improve convergence and stability of the steering wheel.

The present invention is not limited to the above embodiments. Needless to say, various changes may be made without departing from the spirit of the invention.

For example, in the above embodiments, the motor has a configuration in which three rotor magnets (slit group) are arranged in a layered manner in the rotor and, as described above, placing three magnets is suitable in terms of balance; however, the number of magnets to be arranged in a layered manner is not limited to three, and two or four or more magnets may be arranged in a layered manner. Further, although the neodymium bonded magnet is exemplified as a bonded magnet, other bonded magnets such as a samarium iron nitride bonded magnet may be used.

While, in the second embodiment, the cavity part functioning as a flux barrier is provided in the steel sheets constituting the rotor core, a configuration like the first embodiment, in which no cavity part is provided may be adopted. Alternatively, a non-magnetic material may be disposed in the cavity part.

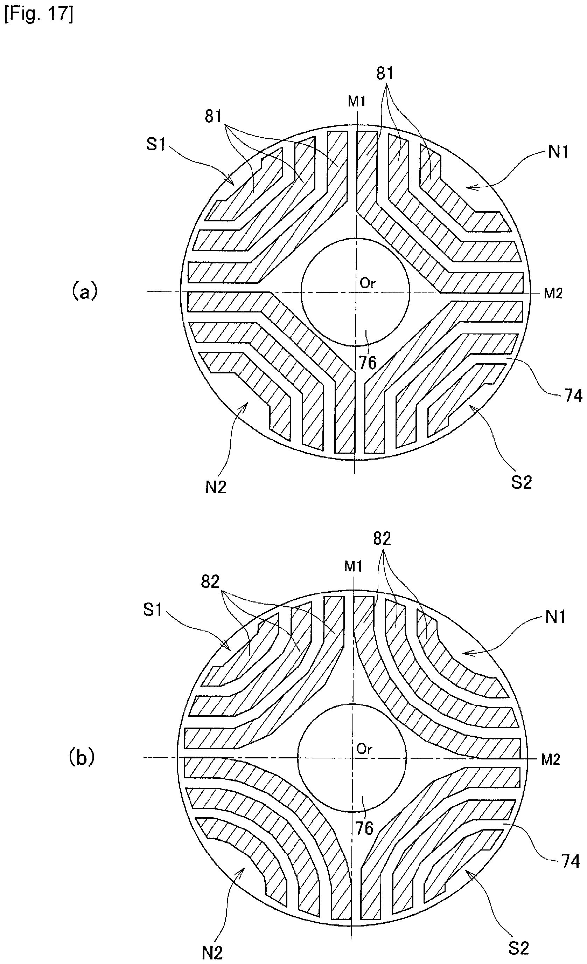

While, in the above embodiments, the magnet having a circular-arc cross section is used as the curved magnet, a "curved" means not only circular-arc form but also includes a magnet 81 illustrated as a modification in FIG. 17A having a trapezoidal shape (upper base and two oblique sides of an isosceles trapezoid). Further, as illustrated in FIG. 17B, a polygonal line shaped magnet 82 approximate to a circular arc is included in the curved magnet.

Further, although the resolver 34 is exemplified as a means for detecting the rotation position of the rotor 14, the means for detecting the rotor rotation position is not limited to this. For example, a combination of a rotor magnet and a hall sensor may be used. The "magnet asymmetrical arrangement" and "rotor eccentricity" described in the second embodiment may be separately applied. In the modification of FIGS. 17A and 17B, when the bonded magnetic material is injection-molded into the slit groups of the rotor core 74, the magnetic material can sufficiently be filled in corner portions of each slit. In this modification as well, the cavity part functioning as a flux barrier may be provided at end portions of each slit.

While, in the above embodiments, the motor 3 is mounted to the steering shaft 2, the motor 3 may be applied to a structure for assisting the pinion 5a in the steering gear box 5 or an EPS system for directly assisting the rack shaft 5b.

### Reference Signs List

- 1:: Electric power steering system (EPS)
- 2:: Steering shaft
- 3:: Brushless motor
- 4:: Steering wheel
- 5:: Steering gear box
- 6:: Tie rod
- 7:: Wheel
- 8:: Assist motor part
- 9:: Deceleration mechanism part
- 10:: Controller (ECU)
- 11:: Torque sensor
- 12:: Stator core
- 13:: Stator
- 14:: Rotor
- 15:: Motor casing
- 16:: Bracket
- 17:: Stator coil
- 17a:: End portion
- 18:: Bus bar unit
- 19:: Tooth section
- 21:: Outer ring part
- 22:: Slot
- 23:: Insulator
- 24:: Bus bar
- 25:: Bus bar terminal
- 26:: Power feeding wire
- 27:: Rotary shaft
- 28:: Rotor core
- 29a, 29b:: Bearing
- 31:: Slit group
- 31a:: First slit
- 31b:: Second slit
- 31c:: Third slit
- 32:: Rotor magnet
- 32n:: Rotor magnet
- 32s:: Rotor magnet
- 33:: Magnetic pole part
- 34:: Resolver
- 34a:: Resolver rotor
- 34b:: Resolver stator
- 34c:: Resolver bracket
- 35:: Fixing screw
- 36:: Magnet for magnetic field orientation
- 37:: Magnetic field orientation die
- 38:: Cavity
- 39:: Upper die
- 39a:: Convex part
- 41:: Runner
- 42:: Sprue
- 43:: Gate
- 50:: Current command section
- 51:: Vehicle speed sensor
- 52:: Current sensor
- 53:: Basic current calculation section
- 54:: Basic current map
- 55:: Differential compensation control section
- 56:: Steering wheel returning control section
- 57:: Convergence control section
- 58:: Target current calculation section
- 59:: RAM
- 60:: ROM
- 61:: Brushless motor
- 62:: Stator
- 63:: Rotor
- 64:: Stator core
- 65:: Stator coil
- 66:: Outer stator
- 67:: Inner stator
- 68:: Tooth section
- 69:: Bridge part
- 71:: Slot
- 72:: Tooth fitting groove
- 73:: Fitting part
- 74:: Rotor core
- 75:: Slit
- 75a:: Cavity part
- 76:: Rotary shaft
- 77:: Magnet
- 77a:: Magnet
- 77n:: N-pole magnet
- 77s:: S-pole magnet
- 78:: Outer peripheral part
- 79:: Space
- 81:: Magnet
- 82:: Magnet
- M1, M2:: Center line
- N1, N2:: N-pole zone
- S1, S2:: S-pole zone
- Os:: S-pole magnet center
- On:: n-pole magnet center
- Or:: Rotor center point
- Rs:: Magnet center distance (Os - Or)
- Rn:: Magnet center distance (On - Or)
- Ls:: Innermost magnet distance
- Ln:: Innermost magnet distance
- Oec:: Eccentric point
- Lec:: Eccentric distance
- P:: Boundary point
- Q:: Outermost position
- Rec:: Eccentric radius
- Rmax:: Rotor outermost position distance (Q - Or)

## Claims

1. An electric power steering system that uses a brushless motor as a drive source and imparts a steering assist force to a steering shaft of a vehicle, the system **characterized in that**
the brushless motor comprises:
a stator having a plurality of tooth sections protruding inward in a radial direction of the motor and phase windings wound around the tooth sections in a distributed manner; and
a rotor rotatably disposed inside the stator and having a rotor core including a plurality sets of slit groups each having a plurality of curved slits arranged in a layered manner and a magnet embedded in each of the slits,
the curved slits are each disposed in the rotor with a convex side thereof facing the center of the rotor,
the magnets are each formed by polar anisotropically magnetizing a bonded magnetic material, and
the rotor is rotated by a magnet torque generated by a magnetic attraction force of the magnets and a reluctance torque based on a difference in inductance between magnetic paths so as to supply the steering assist force.

2. The electric power steering system according to claim 1, **characterized in that**
the magnets are each filled and formed by pressure-supplying the bonded magnetic material to the rotor core disposed in a die and polar anisotropically magnetized by a magnet for magnetic field orientation provided in the die.

3. The electric power steering system according to claim 1 or 2, **characterized in that**
the slit groups each have three curved slits, and
three magnets are arranged in a layered manner along the radial direction.

4. The electric power steering system according to any one of claims 1 to 3, **characterized in that**
the curved slits are each formed along a circular arc having its center point outside the rotor.

5. The electric power steering system according to any one of claims 1 to 4, **characterized in that**
the magnets form a first magnetic pole which is N-pole or S-pole and a second magnetic pole which is different in polarity from the first magnetic pole, and assuming that the direction of a magnetic flux formed by the first and second magnetic poles is set as a d-axis, and that the axis that is magnetically orthogonal to the d-axis is set as a q-axis, a plurality of d-axes and q-axes are provided alternately in the peripheral direction on the rotor,
assuming that the cross-section of the rotor is equally divided into regions to which each d-axis belongs with respect to each of d-axes of the first and second magnets, the magnets of the first magnetic pole side are disposed in such a way as to protrude into a region of the second magnetic pole side without interfering with the magnets of the second magnetic pole side.

6. The electric power steering system according to any one of claims 1 to 5, **characterized in that**
the stator has a bridge part provided in the inner peripheral side of the tooth sections and connecting the inner peripheral side tip portions of the tooth sections.

7. The electric power steering system according to any one of claims 1 to 6, **characterized in that**
the magnets form a first magnetic pole which is N-pole or S-pole and a second magnetic pole which is different in polarity from the first magnetic pole, and assuming that the direction of a magnetic flux formed by the first and second magnetic poles is set as a d-axis, and that the axis that is magnetically orthogonal to the d-axis is set as a q-axis, a plurality of d-axes and q-axes are provided alternately in the peripheral direction on the rotor,
the outer periphery of the rotor is made up of circular arcs each of which has a radius from a different center point for each of the first and second magnetic pole regions, and the center point of the radius is located eccentrically outward in the radial direction by a predetermined distance from the center of the rotor.
